# EUROPEAN PATENT APPLICATION

(11) **EP 4 261 041 A1**
(43) Date of publication of application: **18.10.2023**
(21) Application number: 21903332.1
(22) Date of filing: 03.12.2021
(51) Int. Cl.: B32B 27/18, B32B 27/32, B65D 65/40

(54) **SEALANT FILM**

(30) Priority: 11.12.2020 JP 2020205691
(71) Applicant: Toyo Seikan Co., Ltd., Tokyo 141-8640 (JP)
(72) Inventor: YAMADA, Toshiki, Yokohama-shi, Kanagawa 240-0062 (JP); YASUUMI, Takahiro, Yokohama-shi, Kanagawa 230-0001 (JP); MATSUSAKI, Ren, Yokohama-shi, Kanagawa 230-0001 (JP); UEDA, Yuji, Yokohama-shi, Kanagawa 230-0001 (JP)
(74) Representative: J A Kemp LLP
(86) International application number: PCT/JP2021/044471
(87) International publication number: WO 2022/124229

(57) **Abstract**

A sealant film (10) according to an embodiment of the present invention includes two virgin polyethylene layers of a first virgin polyethylene layer (1) and a second virgin polyethylene layer (3), as well as an intermediate layer (5) that contains a recycled polyethylene and that is provided between the two virgin polyethylene layers (1) and (3).

## Description

### Technical Field

The present invention relates to a sealant film containing a recycled polyethylene resin, and further relates to a laminate for packaging bags and a packaging bag, both using the sealant film.

### Background Art

In view of the importance placed on environmental protection in recent years, various studies have been carried out on recycling techniques that recycle and reuse plastic from used plastic molded articles and plastic waste materials generated during the production of molded articles. For example, polyethylene is widely used in various applications, and using recycled polyethylene products in applications such as films has been proposed.

For example, Patent Document 1 proposes a method for recovering and recycling a multilayer film, in which a low-molecular-weight polyethylene is added to scraps of a transparent multilayer film composed of a polyethylene layer, an adhesive layer, and a nylon layer. Patent Document 1 also proposes pelletizing the recovered recycled product and using the pellets to produce a film.

Patent Document 2 proposes a recycled film having a content of a recycled material (e.g., recycled polyethylene) of from 50 to 90 mass% and a content of foreign matter of from 0.1 to 2 mass% relative to the entire film. Patent Document 2 discloses that the recycled film has a three-layer structure with a first layer containing from 50 to 90 mass% of the recycled material, from 0.1 to 2 mass% of the foreign matter, and from 2 to 4 mass% of a pressure-sensitive adhesive, a second layer containing from 50 to 90 mass% of the recycled material and from 0.1 to 2 mass% of the foreign matter, and a third layer being composed of a virgin low-density polyethylene (LDPE).

However, films using a recycled polyethylene as described above cannot be used as sealant films, and in particular cannot be used to make packaging bags. This is because sealant films have various problems, such as thermal adhesiveness deterioration due to the use of a recycled material, taste or smell deterioration due to odor, poor appearance due to coloration, or strength deterioration.

### Citation List

### Patent Literature

Patent Document 1: JP 3-237143 A
Patent Document 2: JP 2001-122985 A

### Summary of Invention

### Technical Problem

As such, an object of the present invention is to provide a sealant film that uses a recycled polyethylene and that has reliable thermal adhesiveness.

Another object of the present invention is to provide a sealant film that contains a recycled polyethylene and is free from problems such as odor, coloration, or strength deterioration.

Yet another object of the present invention is to provide a laminate for packaging bags and a packaging bag, both formed using the above-described sealant film containing a recycled polyethylene.

### Solution to Problem

An embodiment of the present invention provides a sealant film including two virgin polyethylene layers of a first virgin polyethylene layer and a second virgin polyethylene layer, as well as an intermediate layer that contains a recycled polyethylene and that is provided between the two virgin polyethylene layers.

The following aspects are preferably applied in the sealant film according to an embodiment of the present invention.
(1) The recycled polyethylene contains at least one metal component selected from the group consisting of Mg, Ca, Fe, and Zn.
(2) A layer containing a deodorizer is provided.
(3) Any one of the first virgin polyethylene layer, the second virgin polyethylene layer, or the intermediate layer is the layer containing a deodorizer; or, the layer containing a deodorizer is provided between the intermediate layer and the first virgin polyethylene layer or between the intermediate layer and the second virgin polyethylene layer.
(4) The deodorizer is zeolite.
(5) The intermediate layer contains an antioxidant.
(6) At least one side of the intermediate layer is provided with a white layer containing a white pigment.
(7) The first and/or second virgin polyethylene layer is the white layer; or, the white layer is provided between the first and/or second virgin polyethylene layer and the intermediate layer.
(8) The intermediate layer contains a virgin polyethylene in addition to the recycled polyethylene.
(9) The intermediate layer contains a thermoplastic elastomer or a linear low-density polyethylene as a modifier that improves strength.

The present invention also provides a laminate for packaging bags composed of the above-described sealant film and a base material film laminated on the first virgin polyethylene layer of the sealant film.

In the laminate for packaging bags:
(1) the base material film is preferably formed of polyethylene terephthalate, nylon, or a high-density polyethylene;
(2) a printed layer or an inorganic vapor-deposited layer is preferably formed between the base material film and the first virgin polyethylene layer.

The present invention further provides a packaging bag in which the second virgin polyethylene layers of the above-described laminate for packaging bags are joined by heat-sealing.

The packaging bag can preferably adopt an aspect in which a body portion is formed by the laminate for packaging bags and a bottom portion is formed by a sealant film that does not contain recycled resin.

### Advantageous Effects of Invention

In the sealant film according to an embodiment of the present invention, the intermediate layer containing a recycled polyethylene is sandwiched between two virgin polyethylene layers (the first and the second virgin polyethylene layers). Therefore, a decrease in adhesiveness (laminating property, heat sealability) caused by the recycled polyethylene can be effectively prevented. In particular, when a base material film is laminated on the virgin polyethylene layer on one side (the first virgin polyethylene layer) using a solvent-based or solvent-free thermosetting adhesive, the resulting laminate can be effectively used to make packaging bags. This is because such a laminate can be made into a bag via heat-sealing with the virgin polyethylene layer on the other side (the second virgin polyethylene layer) serving as the inner layer.

Further, the sealant film according to an embodiment of the present invention has the above-described multilayer structure, which facilitates the use of an agent that suppresses performance deterioration or the like associated with the use of a recycled polyethylene; examples of such agent include a deodorizer that prevents taste or smell deterioration due to odor, a white coloring agent (formation of a white layer) that prevents poor appearance due to coloration, and a modifier that prevents strength deterioration.

Further, by utilizing the base material film laminated on the sealant film, the puncture resistance of the packaging bag can be improved; moreover, the gas barrier property can be improved by the formation of an inorganic vapor-deposited film, or the appearance characteristic can be improved by the formation of a printed layer.

### Brief Description of Drawings

FIG. 1 is a schematic cross-sectional side view illustrating the basic layer structure of a sealant film according to an embodiment of the present invention.
FIG. 2 is a schematic cross-sectional side view illustrating another example of the layer structure of the sealant film according to an embodiment of the present invention.
FIG. 3 is a schematic cross-sectional side view illustrating an example of the layer structure of a laminate for packaging bags formed using the sealant film of FIG. 1.
FIG. 4 is a diagram illustrating the cross-sectional structure of a packaging bag made of the laminate of FIG. 3.

### Description of Embodiments

### Sealant Film

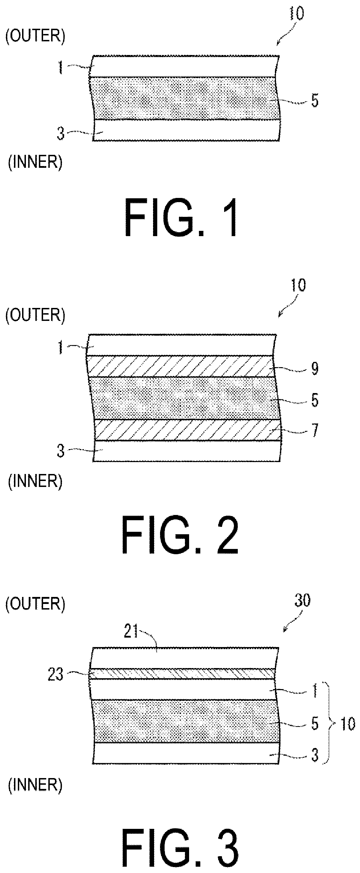

Referring to FIG. 1, a sealant film according to an embodiment of the present invention as a whole is denoted by reference sign 10. As illustrated in FIG. 1, the sealant film 10 has an intermediate layer 5 that contains a recycled polyethylene and that is provided between a first virgin polyethylene layer 1 and a second virgin polyethylene layer 3. (Hereinafter, "polyethylene" may be simply referred to as "PE".)

In general, in a packaging bag that is the final product obtained from a laminate for packaging bags made by attaching a base material film (described later) to the sealant film 10, the base material film side is the outer surface while the side opposite to the base material film is the side that comes in contact with the contents contained in the packaging bag. However, no limitation is intended. As such, in FIGS. 1 to 3, the side to which the base material film is attached (or the base material film side) is referred to as "outer", and the opposite side is referred to as "inner".

As can be seen from FIG. 1, in an embodiment of the present invention, a layer containing a recycled PE serves as the intermediate layer 5 and is sandwiched between the two virgin PE layers 1 and 3. Therefore, the sealant film 10 has a layer structure in which excellent adhesiveness is exhibited on both the outer surface side and the inner surface side.

In particular, since the second virgin PE layer 3 (the inner virgin PE layer) is required to have heat sealability, the virgin PE is preferably a low-density polyethylene (LDPE) having a density in a range of from 0.930 to 0.910 g/cm³. However, no limitation is intended. Also, from the viewpoint of film formability, the virgin PE preferably has a melt flow rate (MFR, 190°C) in a range of approximately from 0.1 to 20 g/10 min.

The recycled PE contained in the intermediate layer 5 is recovered from used polyethylene molded articles or recovered from waste materials generated during the production of polyethylene molded articles. The recycled PE is obtained through various processes such as pulverization, washing with an alkali or the like, molten-state filtration, and extraction with an organic solvent. For this reason, the recycled PE contained in the intermediate layer 5 contains at least one metal component selected from the group consisting of Mg, Ca, Fe, and Zn as an unavoidable impurity associated with undergoing such processes. This means that the presence of these metal components can be confirmed by ICP-MS or the like, and the use of the recycled PE can be confirmed by the presence of these metal components.

The content of the above-described metal component contained in the recycled PE is usually 1 ppm or greater for Mg, 5 ppm or greater for Ca, 0.1 ppm or greater for Fe, and 0.1 ppm or greater for Zn. However, the content varies depending on the manufacturer or other factors and cannot be generalized. In addition to these metal components, Na, Al, K, Ti, or another metal component may be contained. (In the virgin PE, the contents of these metal components are below the detection limit.)

In the present invention, since the recycled PE is used in the intermediate layer 5, the sealant film 10 as well as the laminate for packaging bags and the packaging bag made of the sealant film 10 both have excellent environmental suitability. However, when an excessive amount of the recycled PE is used, the amount of the virgin PE used decreases accordingly, and thus the heat sealability or another physical property deteriorates significantly. As such, from the viewpoint of preventing such a deterioration in a physical property, the content of the recycled PE in the sealant film 10 is preferably approximately from 15 to 90 mass%.

In addition, from the viewpoint of more reliably preventing a decrease in adhesiveness, particularly heat sealability, the thicknesses of the first virgin PE layer 1 and the second virgin layer 3 are preferably approximately from 0.05 to 0.3, assuming that the thickness of the intermediate layer 5 is 1.

Further, the intermediate layer 5 may be formed of the recycled PE alone, but in general, the intermediate layer 5 preferably contains a virgin PE as well. That is, the recycled PE is usually diluted with a virgin PE and stored as pellets, and these recycled PE-containing pellets and virgin PE pellets are subjected to co-extrusion molding to form the sealant film 10. For example, the intermediate layer 5 preferably contains a virgin PE within a range that satisfies the above-described recycled PE content or thicknesses of the first and second virgin PE layers 1 and 3. Specifically, on the condition that the recycled PE content and thickness ratio described above are satisfied, the mass ratio of recycled PE to virgin PE in the intermediate layer 5 is preferably within a range where recycled PE:virgin PE is from 95:5 to 25:75. The PE constituting the intermediate layer 5 may be derived from a petroleum raw material, a plant raw material, or a mixture thereof.

In the sealant film 10 according to an embodiment of the present invention having the above-described layer structure, each layer preferably contains, for example, a deodorizer, an antioxidant, a white pigment, or a modifier.

The deodorizer captures the offensive odor of the recycled polyethylene and prevents taste or smell deterioration of the contents due to the offensive odor. The deodorizer may be added to any one of the first virgin PE layer 1 (the outer virgin PE layer), the intermediate layer 5, or the second virgin PE layer 3 (the inner virgin PE layer). From the viewpoint of using the deodorizer to capture the offensive odor of the recycled PE and prevent taste or smell deterioration of the contents due to the offensive odor, the deodorizer is preferably added to the intermediate layer 5 or the second virgin PE layer 3 (the inner virgin PE layer).

Typical examples of the deodorizer include silica-based particles such as silica gel and aluminum silicate-based particles such as zeolite. The deodorizer is preferably an MFI-type zeolite, particularly preferably a silica-rich MFI-type zeolite having a silica-alumina molar ratio (ratio of SiO₂/Al₂O₃) of 80 or greater, because an MFI-type zeolite has high dispersibility in a resin and good deodorizing performance. Such a deodorizer is usually preferably used in an amount of from 1 to 30 parts by mass per 100 parts by mass of the recycled PE.

Typical examples of the antioxidant include hindered phenols and hindered amines, which have long been used as resin additives. Such antioxidants are used together with the recycled PE in the intermediate layer 5 particularly to prevent further deterioration due to oxidation of the recycled PE. Such antioxidants are preferably used in an amount of from 0.1 to 0.3 parts by mass per 100 parts by mass of the recycled PE.

Typical examples of the white pigment include titanium oxide and zinc oxide. The white pigment is provided to prevent coloration due to the recycled PE, and is added to a layer on the outer surface side with respect to the intermediate layer 5, for example, to the first virgin PE layer 1. This means that the white pigment is used in an amount that is sufficient to conceal the coloration caused by the recycled PE and keeps the coloration from being visible from the outside.

The modifier is used to suppress a deterioration in strength caused by the recycled PE, and is usually added to the intermediate layer 5 in which the recycled PE is present. The modifier is preferably a thermoplastic elastomer. That is, the modifier imparts elasticity to the intermediate layer 5 to improve impact resistance. Examples of the thermoplastic elastomer include an ethylene-α-olefin copolymer, an ethylene-propylene copolymer (EPR), a styrenebutadiene copolymer (SBR), and an ethylene-propylene-butene copolymer (EPBR). In particular, an α-olefin copolymer is preferable from the viewpoint of excellent dispersibility in the intermediate layer 5 containing recycled PE or virgin PE.

The modifier is preferably added to the intermediate layer 5 in an amount of from 1 to 30 parts by mass per 100 parts by mass of the recycled PE.

Further, an embodiment of the present invention may contain a linear low-density polyethylene (LLDPE) as the modifier.

LLDPE has a density in a range from 0.910 to 0.925 g/cm³ and has extremely high molecular linearity. The LLDPE is obtained by, for example, copolymerizing ethylene with a small amount (about several percent) of an α-olefin such as butene-1, hexene-1, or 4-methylpentene-1, and is obtained by introducing a short-chain α-olefin chain as a branch into a long-chain ethylene chain to reduce the density. The LLDPE used as an auxiliary component of the modifier in this way preferably has an MFR (190°C) of from 1.0 to 15 g/10 min from the viewpoint of film formability. The comonomer component is preferably hexene-1 or 4-methylpentene-1, most preferably hexene-1.

The LLDPE is preferably added to the intermediate layer 5 in an amount of from 1 to 30 parts by mass per 100 parts by mass of the recycled PE.

The heat sealant film 10 according to an embodiment of the present invention can adopt various aspects as long as it has the basic three-layer structure described above. For example, by adding the white pigment to the first PE layer 1 located on the outer surface to form a white layer, the color of the recycled PE is concealed and not visible from the outside. Meanwhile, adding a deodorizer to the second PE layer 3 located on the inner side to capture the odor derived from the recycled PE, can prevent taste or smell deterioration of the contents in the packaging bag.

Further, the white layer or the layer containing a deodorizer may be provided as an independent layer.

For example, as illustrated in FIG. 2, a layer 7 containing a virgin PE with a deodorizer added may be provided between the intermediate layer 5 containing the recycled PE and the second virgin PE layer 3 on the inner surface side, and a white layer 9 containing a virgin PE with a white pigment added may be provided between the intermediate layer 5 and the first virgin PE layer 1 on the outer surface side. In such a sealant film 10 having a five-layer composition, it is still desirable to keep the content of recycled PE in the sealant film 10 within the above range (approximately from 30 to 90 mass%).

The thickness of the sealant film 10 according to an embodiment of the present invention as described above is usually preferably in a range of approximately from 50 to 200 µm in consideration of the rigidity when the sealant film 10 is turned into a packaging bag; however, no limitation is intended.

The heat sealant film 10 according to an embodiment of the present invention is produced by dry-blending the components, feeding the resulting mixture to an extruder to melt-knead the mixture, co-extruding the resulting blend into a film shape from a T-die, bringing the extruded multilayer film-shaped melt into contact with a cooling roll to solidify the melt, and winding the resulting solidified film into a roll.

### Laminate for Packaging Bags

By utilizing the good adhesiveness of the virgin PE layers 1 and 3 present on both sides of the above-described sealant film 10 according to an embodiment of the present invention, the sealant film 10 can be used in various applications, most suitably as a laminate for making packaging bags. FIG. 3 illustrates an example of the layer composition of such a laminate.

In FIG. 3, a laminate for packaging bags as a whole is denoted by reference sign 30. The laminate for packaging bags 30 is provided with a base material film 21 that is laminated on the side of the first virgin PE layer 1 of the sealant film 10. A functional layer 23 is formed between the base material film 21 and the first virgin PE layer 1 as necessary.

The base material film 21 is provided on the side serving as the outer surface side of a packaging bag. The material of the base material film 21 is not limited, but is preferably a high-density polyethylene having a density of greater than 0.930 g/cm³, a polyamide resin, a polyester resin, or the like from the viewpoint of achieving a rigidity that is suitable when the laminate for packaging bags 30 is used as a packaging bag.

Examples of the polyamide resins can include nylon 6, nylon 6-6, nylon 6-10, nylon 11, nylon 12, nylon 13, nylon 6/nylon 6,6 copolymers, aromatic nylons (for example, polymetaxylylene adipamide), and amorphous nylons (for example, nylon 6I/6T). Examples of the polyester resin can include polyethylene terephthalate (PET), polybutylene terephthalate, and polyethylene naphthalate (PEN). From the viewpoint of improving the puncture resistance of the packaging bag, the base material film 21 is preferably a polyamide film or a polyester film, particularly preferably a polyamide film. In addition, the base material film 21 may be stretched. The material constituting the base material film 21 may be derived from a petroleum raw material, a plant raw material, or a mixture thereof. The base material film 21 may contain a recycled material.

The thickness of such a base material film 21 is usually approximately from 5 to 50 µm.

Typical examples of the functional layer 23 formed as necessary include an inorganic vapor-deposited layer and a printed layer.

The inorganic vapor-deposited layer is formed by plasma CVD or another technique using an Al compound, a silicon compound, or the like, and is used to improve the gas barrier property of the packaging bag or to conceal the color of the recycled PE. Such an inorganic vapor-deposited layer is a thin layer having a thickness of approximately from 0.001 to 1 µm.

The printed layer is formed by gravure printing, inkjet printing, or another technique using inks of different colors for the purpose of decoration or the like. Particularly in a case in which solid printing is used, the printed layer also has a function of concealing the color of the recycled PE.

The thickness of the printed layer is usually 5 µm or less.

Such a laminate for packaging bags 30 can also be produced by providing a functional layer, such as an inorganic vapor-deposited layer or a printed layer, on a surface of the base material film 21 as appropriate, and then attaching the base material film 21 (or the functional layer 23) to the first virgin PE layer 1 of the sealant film 10 using a thermosetting adhesive such as a urethane-based adhesive or an epoxy-based adhesive.

### Packaging Bag

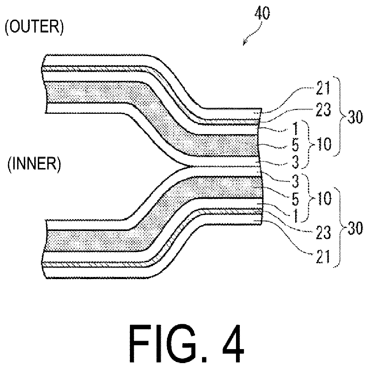

The laminate for packaging bags 30 described above is cut into an appropriate or suitable size. Then, as illustrated in FIG. 4, the second virgin PE layers 3 positioned on the inner surface side are attached to each other by heat-sealing to form a bag, resulting in a packaging bag 40.

Bag production is carried out by known means. For example, two pieces of the laminate 30 are subjected to three-side sealing to make an empty pouch. Then, the bag is filled with contents from the opening, and finally the opening is closed by heat-sealing, resulting in the packaging bag (pouch) 40 filled with contents. Alternatively, one piece of the laminate 30 is made into a cylindrical shape, and the edges of the second virgin PE layer 3 at two sides are heat-sealed to make the body portion of a pouch. Then, using a piece of the laminate 30 to be used exclusively for the bottom portion, an empty pouch is produced. Such a method is advantageous in increasing the volume of the pouch or providing a standing property.

Further, the packaging bag 40 is preferably produced by using the laminate for packaging bags 30 according to an embodiment of the present invention exclusively in the body portion and using an ordinary sealant film formed from virgin PE in which recycled PE is not used exclusively in the bottom portion. Since the bottom of the packaging bag 40 produced in this way has a high strength, the packaging bag 40 produced in this way is particularly suitable for use as a standing pouch.

The packaging bag obtained from the sealant film according to an embodiment of the present invention contains a large amount of recycled PE and has excellent environmental suitability. In addition, since performance deterioration caused by the recycled PE is effectively prevented, such a packaging bag is put to practical use as a packaging bag containing liquid or solid substances, particularly various types of food, liquid detergents, shampoos, conditioners, or the like. In particular, the packaging bag is suitably used as a standing pouch for shampoo refills or conditioner refills.

### Example

The various types of materials, method of film formation, and test methods used in the following experiments are as follows.

The melt flow rate (MFR) is the value at 190°C, and the unit is g/10 min.

### Analysis of Trace Metal Elements Contained in Recycled Polyethylene

Trace metal elements contained in pellets of a recycled polyethylene were analyzed using an ICP-MS Agilent 7500cs available from Agilent Technologies.

### Virgin Polyethylene

### Polyethylene A (PE-A);

A mixture of a virgin linear polyethylene (LLDPE) having an MFR of 0.8 and a virgin low-density polyethylene (LDPE) having an MFR of 2.0.

### Polyethylene B (PE-B);

A virgin polyethylene master batch having an MFR of 2.5 and containing a lubricant and an antiblocking agent.

### Polyethylene C (PE-C);

A virgin polyethylene master batch having an MFR of 4.0 and containing an antioxidant.

### White polyethylene (WH-PE);

A virgin white polyethylene master batch containing 70 mass% of titanium oxide, which is a white pigment.

### Deodorizing polyethylene (DEO-PE);

A virgin polyethylene master batch having an MFR of 1.8 and containing 10 mass% of zeolite as a deodorizer.

### Recycled Polyethylene (RE-PE)

A recycled polyethylene having an MFR of 2.0 was used.

Trace metal analysis detected Mg, Ca, Fe, and Zn. Na, Al, K, and Ti were also detected.

### Formation of Film

A sealant film having a thickness of 150 µm was formed using the above materials in accordance with the description of the following experimental examples, using a three-type, five-layer multilayer film forming apparatus.

For the extruder, three single-screw extruders were used, and the cylinder temperature was set to from 200°C to 225°C.

The T-die temperature was set to from 235°C to 250°C.

The take-off device was a cooling roll at 70°C, and an air knife was used in film formation.

The layer composition was inner layer/white deodorizing layer/intermediate layer/white deodorizing layer/outer layer (thickness ratio = 1/1/6/1/1).

### Deodorizing Property

The odor components that volatilize at 100°C were measured using a gas chromatograph. The deodorizing property was evaluated based on whether the area values of aldehyde nonanal and benzaldehyde were smaller than those in a basic experiment in which the deodorizing polyethylene was not used.

### Concealing Property

When the color, burn marks, and lumps in the recycled polyethylene were hardly visible, the concealing property was evaluated as "good".

### Basic Experiment

A sealant film was made in accordance with the film formation method described above using various types of polyethylene, except that the white deodorizing layer containing the white polyethylene and the deodorizing polyethylene was not provided.

The composition and thickness of each layer are as presented in Table 1 below.

**[Table 1]**

| | | Inner Layer | White Deodorizing Layer | Intermediate Layer | White Deodorizing Layer | Outer Layer |
|---|---|---|---|---|---|---|
| Thickness Ratio of Layers | | 1 | 1 | 6 | 1 | 1 |
| Thickness | (mm) | 0.015 | 0.015 | 0.09 | 0.015 | 0.015 |
| | PE-A | 96.5% | 96.5% | 68.0% | 96.5% | 96.5% |
| | PE-B | 1.5% | 1.5% | 1.5% | 1.5% | 1.5% |
| | PE-C | 2.0% | 2.0% | 2.0% | 2.0% | 2.0% |
| | RE-PE | | | 28.5% | | |
| | WH-PE | | | | | |
| | DEO-PE | | | | | |
| Total | (mass%) | 100.0% | 100.0% | 100.0% | 100.0% | 100.0% |

### Experimental Example 1

A sealant film was made in accordance with the film formation method described above using various types of polyethylene.

The composition and thickness of each layer are as presented in Table 2 below.

**[Table 2]**

| | | Inner Layer | White Deodorizing Layer | Intermediate Layer | White Deodorizing Layer | Outer Layer |
|---|---|---|---|---|---|---|
| Thickness Ratio of Layers | | 1 | 1 | 6 | 1 | 1 |
| Thickness | (mm) | 0.015 | 0.015 | 0.09 | 0.015 | 0.015 |
| | PE-A | 96.5% | 76.5% | 68.0% | 76.5% | 96.5% |
| | PE-B | 1.5% | 1.5% | 1.5% | 1.5% | 1.5% |
| | PE-C | 2.0% | 2.0% | 2.0% | 2.0% | 2.0% |
| | RE-PE | | | 28.5% | | |
| | WH-PE | | 10.0% | | 10.0% | |
| | DEO-PE | | 10.0% | | 10.0% | |
| Total | (%) | 100.0% | 100.0% | 100.0% | 100.0% | 100.0% |

In Experimental Example 1, two white deodorizing layers containing the deodorizing polyethylene (DEO-PE) were provided. As such, in the deodorizing test using a gas chromatograph, the area values of aldehyde nonanal and benzaldehyde were smaller than those in the basic experiment in which the deodorizing polyethylene was not used, indicating good deodorizing properties.

In addition, the color, burn marks, and lumps in the recycled polyethylene (RE-PE) were hardly visible, indicating good concealing properties as well.

### Experimental Example 2

A sealant film was made in the same manner as in Experimental Example 1 except that the amounts of the white polyethylene (WH-PE) and the deodorizing polyethylene (DEO-PE) added to the white deodorizing layer were both changed to 20.0 mass%.

The composition and thickness of each layer are as presented in Table 3 below.

**[Table 3]**

| | | Inner Layer | White Deodorizing Layer | Intermediate Layer | White Deodorizing Layer | Outer Layer |
|---|---|---|---|---|---|---|
| Thickness Ratio of Layers | | 1 | 1 | 6 | 1 | 1 |
| Thickness | (mm) | 0.015 | 0.015 | 0.09 | 0.015 | 0.015 |
| | PE-A | 96.5% | 56.5% | 68.0% | 56.5% | 96.5% |
| | PE-B | 1.5% | 1.5% | 1.5% | 1.5% | 1.5% |
| | PE-C | 2.0% | 2.0% | 2.0% | 2.0% | 2.0% |
| | RE-PE | | | 28.5% | | |
| | WH-PE | | 20.0% | | 20.0% | |
| | DEO-PE | | 20.0% | | 20.0% | |
| Total | (mass%) | 100.0% | 100.0% | 100.0% | 100.0% | 100.0% |

In Experimental Example 2, the amounts of the deodorizing polyethylene (DEO-PE) and the white polyethylene (WH-PE) added were larger than those in Experimental Example 1, and thus the deodorizing properties and the concealing properties were even better.

### Experimental Example 3

A sealant film was made in the same manner as in Experimental Example 1 except that the amounts of the white polyethylene (WH-PE) and the deodorizing polyethylene (DEO-PE) added to the white deodorizing layer were both changed to 30.0 mass%.

The composition and thickness of each layer are as presented in Table 4 below.

**[Table 4]**

| | | Inner Layer | White Deodorizing Layer | Intermediate Layer | White Deodorizing Layer | Outer Layer |
|---|---|---|---|---|---|---|
| Thickness Ratio of Layers | | 1 | 1 | 6 | 1 | 1 |
| Thickness | (mm) | 0.015 | 0.015 | 0.09 | 0.015 | 0.015 |
| | PE-A | 96.5% | 36.5% | 68.0% | 36.5% | 96.5% |
| | PE-B | 1.5% | 1.5% | 1.5% | 1.5% | 1.5% |
| | PE-C | 2.0% | 2.0% | 2.0% | 2.0% | 2.0% |
| | RE-PE | | | 28.5% | | |
| | WH-PE | | 30.0% | | 30.0% | |
| | DEO-PE | | 30.0% | | 30.0% | |
| Total | (mass%) | 100.0% | 100.0% | 100.0% | 100.0% | 100.0% |

In Experimental Example 3, the amounts of the deodorizing polyethylene (DEO-PE) and the white polyethylene (WH-PE) added were also larger than those in Experimental Example 1, and thus the deodorizing properties and concealing properties were also even better.

### Reference Signs List

1: First virgin polyethylene layer
3: Second virgin polyethylene layer
5: Intermediate layer
10: Sealant film
21: Base material film
23: Functional layer
30: Laminate for packaging bags
40: Packaging bag

## Claims

1. A sealant film comprising two virgin polyethylene layers of a first virgin polyethylene layer and a second virgin polyethylene layer, as well as an intermediate layer that contains a recycled polyethylene and that is provided between the two virgin polyethylene layers.

2. The sealant film according to claim 1, wherein the recycled polyethylene comprises at least one metal component selected from the group consisting of Mg, Ca, Fe, and Zn.

3. The sealant film according to claim 1, wherein a layer comprising a deodorizer is provided.

4. The sealant film according to claim 3, wherein any one of the first virgin polyethylene layer, the second virgin polyethylene layer, or the intermediate layer is the layer comprising a deodorizer; or, the layer comprising a deodorizer is provided between the intermediate layer and the first virgin polyethylene layer or between the intermediate layer and the second virgin polyethylene layer.

5. The sealant film according to claim 3, wherein the deodorizer is zeolite.

6. The sealant film according to claim 1, wherein the intermediate layer comprises an antioxidant.

7. The sealant film according to claim 1, wherein at least one side of the intermediate layer is provided with a white layer comprising a white pigment.

8. The sealant film according to claim 7, wherein the first and/or second virgin polyethylene layer is the white layer; or, the white layer is provided between the first and/or second virgin polyethylene layer and the intermediate layer.

9. The sealant film according to claim 1, wherein the intermediate layer comprises a virgin polyethylene in addition to the recycled polyethylene.

10. The sealant film according to claim 1, wherein the intermediate layer comprises a thermoplastic elastomer or a linear low-density polyethylene as a modifier that improves strength.

11. A laminate for packaging bags comprising:
the sealant film according to any one of claim 1; and
a base material film laminated on the first virgin polyethylene layer of the sealant film.

12. The laminate for packaging bags according to claim 11, wherein the base material film is formed of polyethylene terephthalate, nylon, or a high-density polyethylene.

13. The laminate for packaging bags according to claim 11, wherein a printed layer or an inorganic vapor-deposited layer is formed between the base material film and the first virgin polyethylene layer.

14. A packaging bag in which second virgin polyethylene layers of the laminate for packaging bags according to claim 11 are joined by heat-sealing.

15. The packaging bag according to claim 14, wherein a body portion is formed by the laminate for packaging bags and a bottom portion is formed by a sealant film that does not contain recycled resin.
